(19) **Europäisches Patentamt**
**European Patent Office**
**Office européen des brevets**

(11) **EP 1 934 503 B1**

(12) **EUROPEAN PATENT SPECIFICATION**

(45) Date of publication and mention
of the grant of the patent:
**18.08.2010 Bulletin 2010/33**

(51) Int Cl.:
***F16H 55/36*** (2006.01)  ***F16H 7/02*** (2006.01)

(21) Application number: **06803013.9**

(22) Date of filing: **06.09.2006**

(86) International application number:
**PCT/US2006/034642**

(87) International publication number:
**WO 2007/030490 (15.03.2007 Gazette 2007/11)**

(54) **MULTIPLE RIBBED PULLEY AND SYSTEM**

RIEMENSCHEIBE MIT MEHREREN RIPPEN UND SYSTEM

POULIE A NERVURES MULTIPLES ET SYSTEME

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.09.2005 US 223615**

(43) Date of publication of application:
**25.06.2008 Bulletin 2008/26**

(73) Proprietor: **THE GATES CORPORATION**
**Denver, CO 80202 (US)**

(72) Inventors:
• **REEDY, Mitchell**
**Springdale, AZ 72762 (US)**

• **ALDEN, John**
**Rochester Hills, MI 48309 (US)**

(74) Representative: **Tunstall, Christopher Stephen et al**
**Carpmaels & Ransford**
**One Southampton Row**
**London**
**WC1B 5HA (GB)**

(56) References cited:
**EP-A1- 0 010 919**  **JP-A- 2004 239 314**
**US-A- 4 840 607**  **US-A- 4 884 998**
**US-A- 4 981 462**

**Description**

Field of the Invention

The invention relates to a multiple ribbed pulley and a pulley and belt system, and more particularly, to a pulley and a pulley and belt system having a pulley rib and groove profile configuration that cooperates with a belt shape when the belt is under a tensile load.

Background of the Invention

Proper operation of a V-belt drive involves placing a belt into the grooves of mating pulleys and applying tension to the belt.

Most V-belt drives operate with a relatively small amount of belt elongation. However, when tension is added to the system the belt will elongate longitudinally. As V-belt elongation increases, belt width and thickness decreases. The outer edges of the belt experience more of a change in width than the center section of the belt. In the case of a multi-strand belt, the outer strands will have different cross sectional dimensions than the center strands. Because all the pulley grooves are the same dimension and at a consistent spacing, they will not match the shape and spacing of a belt under tension.

This mismatch in profile between the pulley and belt will cause noise, accelerated belt wear and reduced belt durability.

Representative of the art is the generic US patent no. 4,981,462 to White (1991) which discloses an endless power transmission belt construction, a rotatable pulley therefore, a combination of the belt construction and pulley and methods of making the same are provided, the belt construction having opposed side edges and having an inner surface defining a plurality of longitudinally disposed and alternately spaced apart like projections and grooves for meshing with an outer peripheral ribbed surface of a rotatable pulley, each projection of the belt construction having a generally V-shaped transverse cross-sectional configuration defined by two substantially straight side edges that converge from the respective apexes of the grooves of the belt construction that are on opposite sides of that projection to an apex of that projection, the side edges of each projection of the belt construction defining an angle of approximately 60° therebetween with the thickness of the belt construction being substantially the same as the thickness of a similar belt construction wherein the angle is approximately 40° and with the distance between the center lines of the grooves of the belt construction that are on opposite sides of that projection being larger than such distance of the similar belt construction.

What is needed is a multiple ribbed pulley and a pulley/belt system having a pulley rib and groove profile configuration that cooperates with a belt shape when the belt is under a tensile load. The present invention meets this need.

Summary of the Invention

The primary aspect of the invention is to provide a multiple ribbed pulley and a pulley and belt system having a pulley rib and groove profile configuration that cooperates with a belt shape when the belt is under a tensile load.

Other aspects of the invention will be pointed out or made obvious by the following description of the invention and the accompanying drawings.

The invention comprises a multiple ribbed pulley and a pulley and belt system having a pulley rib and groove profile configuration that cooperates with a belt shape when the belt is under a tensile load.

Brief Description of the Drawings

The accompanying drawings, which are incorporated in and form a part of the specification, illustrate preferred embodiments of the present invention, and together with a description, serve to explain the principles of the invention.

Fig. 1 is a cross section of a belt and pulley.
Fig. 2 is a cross section of a belt under a tensile load engaged with a pulley.
Fig. 3 is a cross-sectional schematic of the pulley grooves.
Fig. 4 is a cross-sectional view of a tensile loaded belt engaged with an inventive pulley.
Fig. 5 is a cross-sectional schematic of the pulley grooves.
Fig. 6 is a cross-sectional view of a tensile loaded belt engaged with an inventive pulley.
Fig. 7 is a schematic cross-sectional view of the inventive pulley rib configuration.
Fig. 8 is a cross-sectional view of a tensile loaded belt engaged with an inventive pulley.
Fig. 9 is a cross-sectional view of a comparison of the profile of a prior art pulley and the profile of an inventive pulley.

Detailed Description of the Preferred Embodiment

The invention comprises a multiple ribbed pulley having a rib and groove arrangement that is configured to complement a belt shape when the belt is subjected to operating tension (tensile load), and a system comprising a pulley and belt combination.

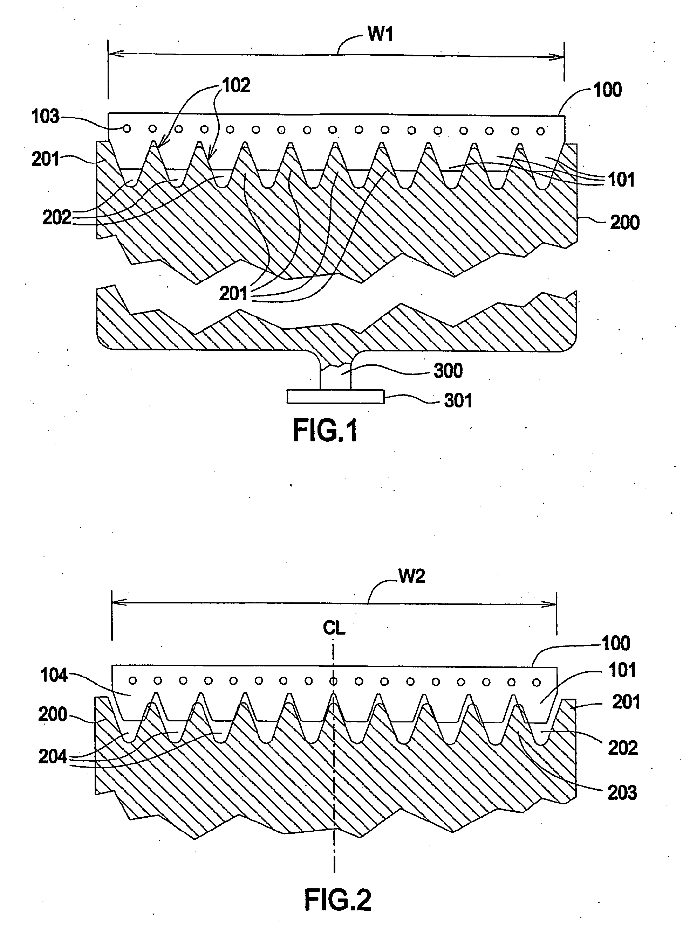

Fig. 1 is a cross section of a belt and pulley. Belt. 100 comprises ribs 101 and grooves 102. Ribs 101 run in a longitudinal direction on the belt 100. Tensile cords 103 also run in a longitudinal direction in the belt. Belt 100 is also referred to as a V-ribbed, multi-ribbed or multiple ribbed belt.

Pulley 200 comprises a belt bearing surface having ribs 201 and grooves 204. Ribs 101 in belt 100 engage grooves 202 in pulley 200. Ribs 201 in pulley 200 engage grooves 102 in belt 100. A web 300 connects the belt bearing surface to a hub 301. Hub 301 is used to connect the pulley to a shaft (not shown).

The belt is constructed using material and methods known in the art. The belt may comprise polymeric materials including polybutadiene, EPDM, HNBR, SBR, polychloroprene, natural rubber and isobutene isoprene rubbers, or a combination of two or more of the foregoing. The tensile cords may comprise aramid, polyester, fiberglass, nylon, polyolefin, PBO, PEN, carbon, metal wire/cable, cotton and rayon, or a combination of two or more of the foregoing.

Such belts are typically used on accessory belt drive systems on automotive engines, although they may also be used on various industrial applications including transmitting power for driving pumps, compressors and engines, namely, any installation where power transmission by belt is desired. The belt shown in Fig. 1 is under minimal or no tensile load and has a width W1.

Fig. 2 is a cross section of a belt under a tensile load engaged with a pulley. In this Figure 2 belt 100 is under a tensile load as would be normally experienced in an operation condition. Due to the tensile load the outermost ribs 101, 104 are drawn slightly toward the centerline CL of the belt 100, namely, the belt is slightly stretched and therefore somewhat narrower by virtue of the tensile load. The belt has an operating width W2 which is less than width W1. The shape of the narrowed belt is shown superimposed on the pulley profile.

The optimum fit of the belt in the pulley is adversely affected by the narrowing of the belt under load, particularly with respect to the relationship of the outer ribs 101 and 104 with grooves 202, 204 where the effect is most pronounced.

The instant invention configures the pulley dimensionally to allow for the narrowing of the belt so that the belt achieves a proper fit with all pulley grooves when in operation and under load. Improved fit increases the useful life of the belt while decreasing the tendency to make noise caused by the improper engagement of the belt ribs with the pulley grooves. The inventive pulley comprises grooves having a spacing between adjacent grooves that decreases as a function of the distance of the grooves from the pulley centerline CL.

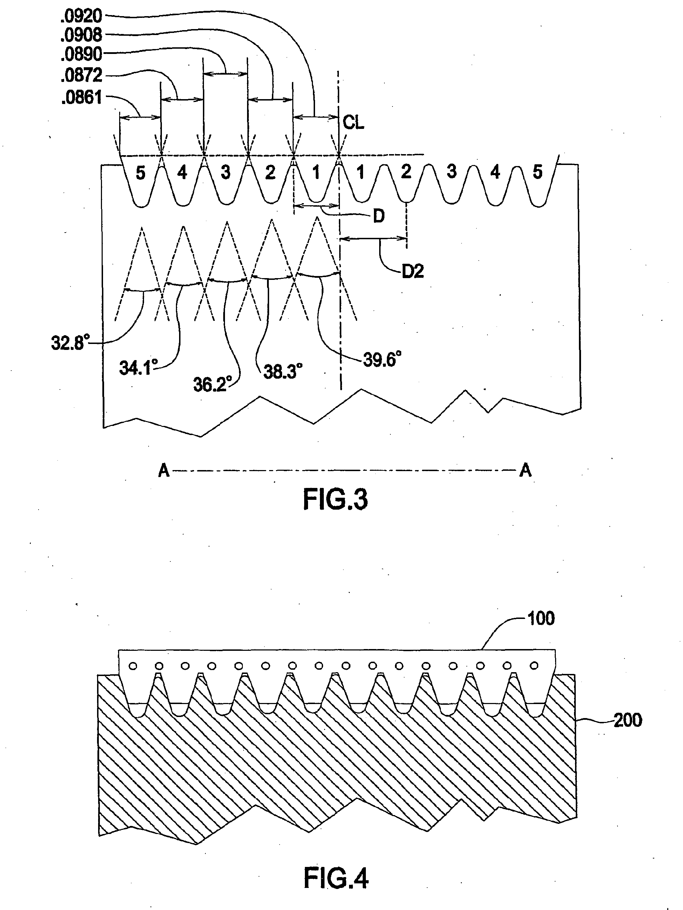

Referring to Fig. 3, which is a cross-sectional schematic of the inventive pulley, the spacing of the ribs for the inventive pulley in a direction outward from the pulley centerline CL, (i.e. parallel to an axis of rotation A-A), is calculated using Equation 1.

In the inventive pulley, the belt bearing surface has a plurality of pulley ribs and pulley grooves. The pulley rib spacing between adjacent pulley ribs decreases as the distance (D) of each pulley rib increases from a pulley centerline (CL). Further, the pulley groove angle decreases as the distance (D2) of each pulley groove increases from a pulley centerline (CL).

**Equation 1 – Pulley Rib Spacing**

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

Where: $S_{gn}$ = rib spacing for $n^{th}$ rib

$S_g$ = nominal rib spacing
$d_B$ = ball diameter
$\theta_n$ = pulley groove angle, in degrees, for the $n^{th}$ pulley groove

$\theta$ = nominal pulley groove angle in degrees Note: For these equations, ribs are numbered starting from the centerline of the pulley moving towards the outer edge of the pulley and are symmetrical about the centerline CL. For pulleys with an even number of total grooves, there will be two "number 1" grooves that are adjacent to (straddle) the centerline CL rib of the pulley. For pulleys with an even number of grooves the pulley rib angle for the rib between the adjacent "number 1" grooves is equal to the "number 1" groove angle. For pulleys with an odd number of total grooves, there is only one "number 1" groove and it is centered on the centerline CL of the pulley.

As shown in Fig. 3, the rib spacing and rib angle decrease for each rib disposed outward from the center rib. Fig. 3 depicts a 10 groove, 9 rib belt. This is only an example and is not intended to limit the scope of the invention. The inventive pulley may be used for belts having three or more ribs with equal success.

In addition, the inventive pulley compensates for the distortion of the rib angles caused when the belt is under a tensile load. Since the belt ribs are drawn slightly inward toward a belt longitudinal centerline under load, the angles for pulley grooves are progressively reduced as they are displaced from the pulley centerline.

The angle for the pulley grooves of the improved pulley are calculated from Equation 2:

**Equation 2 – Pulley Groove Angle**

$$\theta_n = a_n + \frac{b}{\pi} \times \tan^{-1}\left(\frac{t - 2n - 4}{3}\right) + \frac{b}{2}$$

Where: $\theta_n$ = pulley groove angle, in degrees, for the $n^{th}$ pulley groove

$n$ = number of pulley rib
$t$ = total number of grooves in the pulley
$a_n = \theta - [\%stretch \times (8.2t + 2n)]$
$b = \%stretch \times (6t + \theta)$
Where: $\theta$ = nominal pulley groove angle in degrees %stretch = the percent stretch in the belt at normal design tensile load.

Example #1: Pulley dimensions are calculated in Table 1 and shown in Figure 3 for engaging a 10 rib, multiple ribbed belt with a nominal rib spacing ($S_g$) of 0.092" (2.34mm), a nominal rib angle ($\theta$) of 40°, operating at a tensile load resulting in 10% stretch, using a standard ball diameter ($d_B$) of 0.0625" (1.59mm). The improved belt/pulley combination groove and rib relationship is shown in Fig. 4.

**Table 1 - Pulley groove dimensions - example**

|  | Pulley groove number - $n$ | | | | |
| --- | --- | --- | --- | --- | --- |
|  | 1 | 2 | 3 | 4 | 5 |
| Groove angle - $\theta_n$ | 39.6° | 38.3° | 36.2° | 34.1° | 32.8° |
| Rib Spacing - $S_{gn}$ | 0.0920"  2.34 mm | 0.0908"  2.31 mm | 0.0890"  2.26 mm | 0.0872"  2.21 mm | 0.0861"  2.19 mm |

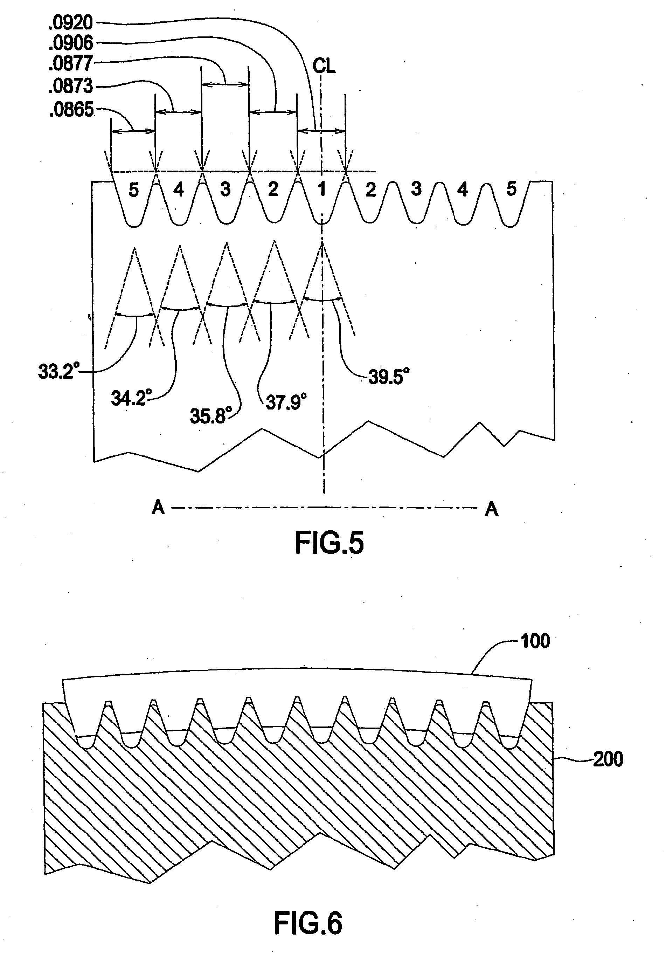

Example #2: Pulley dimensions are calculated in Table 2 and shown in Figure 5 for engaging a 9 rib multiple ribbed belt with a nominal belt rib spacing (Sg) of 0.092" (2.34mm), a nominal belt rib angle ($\theta$) of 40°, operating at a tensile load resulting in a 10% stretch, using a standard ball diameter ($d_B$) of 0.0625" (1.59mm). % stretch refers to the increase in overall length caused by the belt load.

**Table 2 - Pulley groove dimensions - example**

|  | Pulley groove number - $n$ | | | | |
| --- | --- | --- | --- | --- | --- |
|  | 1 | 2 | 3 4 | | 5 |
| Groove angle - $\theta_n$ | 39.5° | 37.9° | 35.8° | 34.2° | 33.2° |
| Rib Spacing - $S_{gn}$ | 0.0920"  2.34 mm | 0.0906"  2.30 mm | 0.0877"  2.25 mm | 0.0873"  2.22 mm | 0.0865"  2.20 mm |

Fig. 6 is a cross-sectional view of a tensile loaded belt engaged with an inventive pulley. The rib and groove spacing assures proper contact between the belt and the pulley across the entire width of the belt.

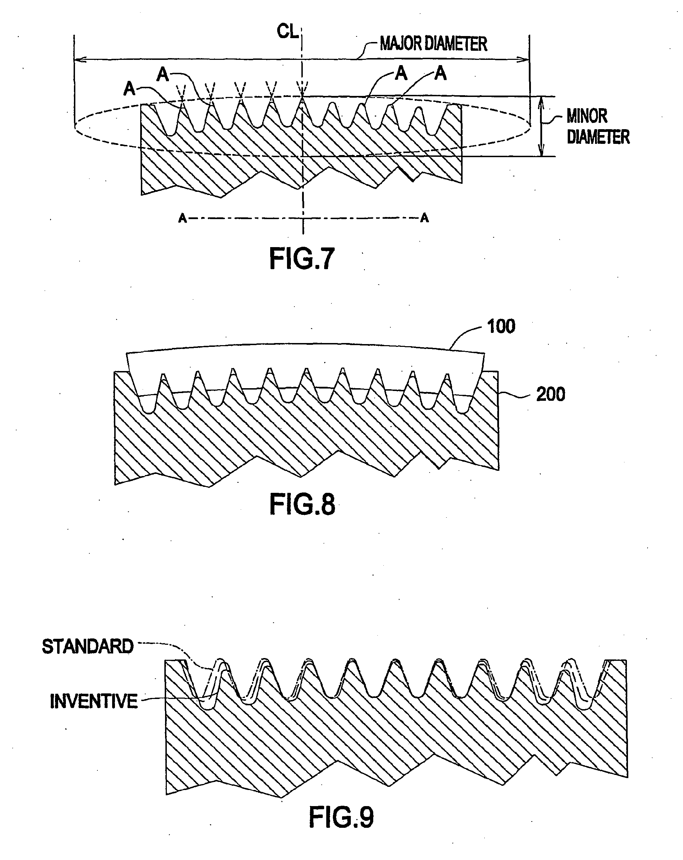

When placed in a standard pulley, the outer sections of the belt are at higher operating tension than the center of the belt. This uneven loading decreases the belt's ability to transmit power when compared to a belt that is uniformly loaded. Therefore, to further enhance the efficiency of the inventive pulley, the pulley profile can be slightly curved so that belt cord loading is consistent across the width of the entire belt section. Pulley profile curvature as determined by the positions of the apexes (A) of the plurality of ribs is defined by an ellipse, see Fig. 7. Pulley groove spacing and pulley groove angles are determined by Equations 1 and 2, respectfully. Referring to Fig. 7, the dimension and orientation of the ellipse are described by the following:

Major diameter = 1.5 X nominal width of the belt.
Minor diameter = 2 X the nominal pulley rib spacing.

Major diameter orientation: the major diameter orientation is substantially parallel with the axis of rotation (A-A) of the pulley and the curvature of the apexes (A) is substantially concave in the direction of the pulley axis (A-A).

For example, the belt properties for a typical belt to be used with the proposed pulley would have longitudinal elastic properties similar to those shown in Chart 1 and a nominal modulus of 1530 lbs/rib (6800 N/rib) in the working tension range - i.e. at approximately 8% strain (stretch). The nominal width is determined by the number of ribs, namely,

Nominal Belt Width = # of belt ribs x 2.34 mm.

**Chart 1 – Longitudinal Elastic Properties for Typical Multiple Ribbed**

**Multiple Ribbed Belt Elastic Properties**

Stress - lbs/strand/rib vs Strain - %

Fig. 8 is a schematic cross-sectional view of the inventive curved pulley configuration. The belt shown as an example has a nominal width of 23.4 mm. Using the foregoing equations, the major diameter = 23.4mm x 1.5 = 35.1mm. The minor diameter = 2 x the nominal pulley rib spacing = 2 x 0.092" (2.34mm) = 4.68mm. The foregoing belt and calculations are only offered by way of example and are not intended to limit the scope of the invention.

The curve of the belt substantially aligns with the curved configuration of the pulley ribs. Fig. 8 depicts the arc form of the pulley apexes described in Fig. 7. This pulley configuration assures full contact of the belt with the pulley, thereby maximizing power transmission between the belt and pulley. The pulley shown in Fig. 8 comprises the ribs spacing described for Fig. 3 as well as the elliptical relationship for the pulley curvature as described for Fig. 7.

Fig. 9 is a cross-sectional view of a comparison of the profile of a prior art pulley and the profile of an inventive pulley. The significant difference in the prior art engagement between the belt and pulley as compared to the inventive combination is clearly evident.

## Claims

1. A multiple ribbed pulley and belt system comprising:

   a multiple ribbed belt (100);

a pulley (200) comprising;
a hub (301) connected to a belt bearing surface; the belt bearing surface having a profile comprising pulley ribs (101) and pulley grooves (102);
**characterized in that**
the spacing $S_{gn}$ of the pulley ribs (101) with respect to a pulley centerline (CL) is determined according to the following equation;

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

where $S_{gn}$ = rib spacing for $n^{th}$ pulley rib

$S_g$ = nominal pulley rib spacing
$d_B$ = ball diameter;
the angle of each pulley groove is determined according to the following equation;

$$\theta_n = a_n + \frac{b}{\pi} \times \tan^{-1}\left(\frac{t - 2n - 4}{3}\right) + \frac{b}{2}$$

where $\theta_n$ = pulley groove angle, in degrees, for

the $n^{th}$ pulley groove
$n$ = number of pulley rib
$t$ = total number of pulley grooves in the pulley
$a_n = \theta - [\% stretch \times (8.2t + 2n)]$
$b = \% stretch \times (6t + \theta)$
where $\theta$ = nominal pulley groove angle in degrees $\% stretch$ = the percent stretch of the belt when subjected to a tensile load.

2. The multiple ribbed pulley and belt system as in claim 1 further comprising:

a curvature for an apex of the pulley ribs substantially describing an ellipse described by the following:

a major diameter = approximately 1.5 X a nominal width of the belt,
a minor diameter = approximately 2 X a nominal pulley rib spacing; and
the major diameter orientation is substantially parallel with the axis of rotation (A-A) of the pulley and the curvature is substantially centered on a pulley axis (CL).

3. A multiple ribbed pulley comprising:

a belt bearing surface having a plurality of pulley ribs (101) and pulley grooves (102);
**characterized in that** the multiple ribbed pulley comprises
a pulley rib spacing $S_{gn}$ between adjacent pulley ribs that progressively decreases as a distance (D) progressively increases from a pulley centerline (CL); and
a pulley groove angle $\theta_n$ which progressively decreases as the distance (D2) progressively increases from a pulley centerline (CL).

4. The multiple ribbed pulley as in claim 3 further comprising:

a curvature for the apexes (A) of the pulley ribs substantially describing an ellipse comprising;
a major diameter = approximately 1.5 X a nominal width of a belt;
a minor diameter = approximately 2 X a nominal pulley rib spacing; and
the major diameter orientation is substantially parallel with the axis of rotation (A-A) of the pulley and the curvature of the apexes is substantially concave in the direction of the axis of rotation (A-A).

5. A multiple ribbed pulley comprising:

   a belt bearing surface having a plurality of pulley ribs (101) and pulley grooves (102); and
   **characterized in that** the multiple ribbed pulley further comprises
   a pulley rib spacing $S_{gn}$ between adjacent pulley ribs that progressively decreases as a distance (D) progressively increases from a pulley centerline (CL).

6. The multiple ribbed pulley as in claim 5 further comprising:

   a pulley groove angle $\theta_n$ which progressively decreases as the distance (D2) progressively increases from a pulley centerline (CL).

7. The multiple ribbed pulley as in claim 5, wherein:

   the spacing of the pulley ribs in a direction from a pulley centerline (CL) is determined according to the following equation;

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

   where: $S_{gn}$ = rib spacing for $n^{th}$ pulley rib

   $S_g$ = nominal pulley rib spacing
   $d_B$ = ball diameter
   $\theta_n$ = pulley groove angle, in degrees, for
   the $n^{th}$ pulley groove.

8. The multiple ribbed pulley as in claim 5, wherein:

   the angle of each pulley groove is determined according to the following equation;

$$\theta_n = a_n + \frac{b}{\pi} \times \tan^{-1}\left(\frac{t - 2n - 4}{3}\right) + \frac{b}{2}$$

   where $\theta_n$ = pulley groove angle, in degrees, for

   the $n^{th}$ pulley groove
   $n$ = number of pulley rib
   $t$ = total number of pulley grooves in the pulley
   $a_n = \theta - [$*%stretch* x $(8.2t + 2n)]$
   $b$ = *%stretch* $\times$ $(6t + \theta)$,
   where $\theta$ = nominal pulley groove angle in degrees
   *%stretch* = the percent stretch of the belt when subjected to a tensile load.

**Patentansprüche**

1. Mehrrippen-Riemenscheiben- und Riemensystem mit:

   einem Mehrrippenriemen 100);
   einer Riemenscheibe (200) mit:

      einer Nabe (301), die mit einer Riemenauflagefläche verbunden ist;

wobei die Riemenauflagefläche ein Riemenscheibenrippen (101) und Riemenscheibennuten (102) aufweisendes Profil aufweist;
**dadurch gekennzeichnet, dass** die Mehrrippen-Riemenscheibe die folgenden Merkmale aufweist:

der Abstand $S_{gn}$ der Riemenscheibenrippen (102) in Bezug auf die Riemenscheibenmittellinie (CL) ist gemäß der folgenden Gleichung bestimmt:

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

wobei $S_{gn}$ = Rippenabstand der n-ten Riemenscheibenrippe,
$S_g$ = nomineller Riemenscheibenrippenabstand,
$d_B$ = Balligkeitsdurchmesser,
der Winkel jeder Riemenscheibennut ist gemäß der folgenden Gleichung bestimmt:

$$\theta_n = a_n + \frac{b}{\pi} \times \tan^{-1}\left( \frac{t - 2n - 4}{3} \right) + \frac{b}{2}$$

wobei $\theta_n$ = Riemenscheibennutenwinkel der n-ten Riemenscheibennut in Grad,
n = Nummer der Riemenscheibenrippe,
t = Gesamtanzahl der Riemenscheibennuten in der Riemenscheibe,
$a_n$ = θ - [% Streckung x (8,2t + 2n)
b = % Streckung x (6t + θ)
wobei θ = nomineller Riemenscheibennutenwinkel in Grad
% Streckung = prozentuale Streckung des Riemens unter Zugbelastung.

2. Mehrrippen-Riemenscheiben- und Riemensystem nach Anspruch 1, ferner mit:

einer Krümmung des Scheitels der Riemenscheibenrippen, welche im Wesentlichen eine Ellipse beschreibt, die durch die folgenden Merkmale beschrieben ist:

einen großen Durchmesser = ungefähr 1,5 x die nominelle Breite des Riemens,
einen kleinen Durchmesser = ungefähr 2 x der nominelle Riemenscheibenrippenabstand; und
die Ausrichtung des großen Durchmessers ist im Wesentlichen parallel zu der Drehachse (A-A) der Riemenscheibe, und die Krümmung ist im Wesentlichen auf die Riemenscheibenachse (CL) zentriert.

3. Mehrrippen-Riemenscheibe mit:

einer Riemenauflagefläche mit mehreren Riemenscheibenrippen (101) und Riemenscheibennuten (102),
**dadurch gekennzeichnet, dass** die Mehrrippen-Riemenscheibe ferner aufweist:

einen Riemenscheibenrippenabstand $S_{gn}$ zwischen benachbarten Riemenscheibenrippen, welcher mit der progressiven Zunahme der Entfernung (D) von der Riemenscheibenmittellinie (CL) progressiv abnimmt; und einen Riemenscheibennutenwinkel $\theta_n$, welcher mit der progressiven Zunahme der Entfernung (D2) von der Riemenscheibenmittellinie (CL) progressiv abnimmt.

4. Mehrrippen-Riemenscheibe nach Anspruch 3, ferner mit:

einer Krümmung der Scheitel (A) der Riemenscheibenrippen, welche im Wesentlichen eine Ellipse beschreibt, mit:

einem großen Durchmesser = ungefähr 1,5 x die nominelle Breite des Riemens,
einem kleinen Durchmesser = ungefähr 2 x der nominelle Riemenscheibenrippenabstand; und
wobei die Ausrichtung des großen Durchmessers im Wesentlichen parallel zu der Drehachse (A-A) der Riemenscheibe verläuft, und die Krümmung in Richtung der Drehachse (A-A) im Wesentlichen konkav ist.

**5.** Mehrrippen-Riemenscheibe mit:

einer Riemenauflagefläche mit mehreren Riemenscheibenrippen (101) und Riemenscheibennuten (102), und **dadurch gekennzeichnet, dass** die Mehrrippen-Riemenscheibe ferner aufweist:

einen Riemenscheibenrippenabstand $S_{gn}$ zwischen benachbarten Riemenscheibenrippen, welcher mit der progressiven Zunahme der Entfernung (D) von der Riemenscheibenmittellinie (CL) progressiv abnimmt.

**6.** Mehrrippen-Riemenscheibe nach Anspruch 5, ferner mit:

einem Riemenscheibennutenwinkel $\theta_n$, welcher mit der progressiven Zunahme der Entfernung (D2) von der Riemenscheibenmittellinie (CL) progressiv abnimmt.

**7.** Mehrrippen-Riemenscheibe nach Anspruch 5, bei welcher:

der Abstand $S_{gn}$ der Riemenscheibenrippen in von der Riemenscheibenmittellinie (CL) weg weisender Richtung gemäß der folgenden Gleichung bestimmt ist:

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

wobei $S_{gn}$ = Rippenabstand der n-ten Riemenscheibenrippe,
$S_g$ = nomineller Riemenscheibenrippenabstand,
$d_B$ = Balligkeitsdurchmesser,
$\theta_n$ = Riemenscheibennutenwinkel der n-ten Riemenscheibennut in Grad.

**8.** Mehrrippen-Riemenscheibe nach Anspruch 5, bei welcher:

der Winkel jeder Riemenscheibennut gemäß der folgenden Gleichung bestimmt ist:

$$\theta_n = a_n + \frac{b}{\pi} \times \tan^{-1}\left( \frac{t - 2n - 4}{3} \right) + \frac{b}{2}$$

wobei $\theta_n$ = Riemenscheibennutenwinkel der n-ten Riemenscheibennut in Grad,
n = Nummer der Riemenscheibenrippe,
t = Gesamtanzahl der Riemenscheibennuten in der Riemenscheibe,
$a_n$ = $\theta$ - [% Streckung x (8,2t + 2n)
b = % Streckung x (6t + $\theta$)
wobei $\theta$ = nomineller Riemenscheibennutenwinkel in Grad
% Streckung = prozentuale Streckung des Riemens unter Zugbelastung.

## Revendications

**1.** Système de courroie et de poulie à nervures multiples comprenant :

une courroie (100) à nervures multiples ;
une poulie (200) comprenant ;
un moyeu (301) relié à une surface d'appui de courroie ;
la surface d'appui de courroie ayant un profil comprenant des nervures (101) de poulie et des rainures (102) de poulie ;
**caractérisé en ce que**

l'espacement $S_{gn}$ des nervures (101) de poulie par rapport à une ligne centrale (CL) de poulie est déterminé selon l'équation suivante ;

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

où

$S_{gn}$ = espacement de nervure pour la $n^{ième}$ nervure de poulie
$S_g$ = espacement nominal des nervures de poulie $d_B$ = diamètre de bille ;
l'angle de chaque rainure de poulie est déterminé selon l'équation suivante ;

$$\theta_n = a_n + \frac{b}{\pi} \times \tan^{-1}\left(\frac{t-2n-4}{3}\right) + \frac{b}{2}$$

où

$\theta_n$ = angle de rainure de poulie, en degrés, pour la $n^{ième}$ nervure de poulie
n = nombre de nervures de poulie
t = nombre total des rainures de poulie dans la poulie $a_n = \theta$-[%-*étirement* x (8,2$t$+2$n$)]
$b = \%étirement$ x (6$t$+$\theta$)
où
$\theta$ = angle nominal des rainures de poulie en degrés
$\%étirement$ = pourcentage d'étirement de la courroie lorsqu'elle est soumise à une charge de traction.

2. Système de courroie et de poulie à nervures multiples selon la revendication 1, comprenant en outre le fait :

qu'une courbure pour un sommet des nervures de poulie décrit essentiellement une ellipse décrite par ce qui suit :

un diamètre majeur = environ 1,5 X une largeur nominale de la courroie,
un diamètre mineur = environ 2 X un espacement nominal de nervure de poulie; et
l'orientation du diamètre majeur est sensiblement parallèle à l'axe de rotation (A-A) de la poulie et la courbure est sensiblement centrée sur un axe (CL) de poulie.

3. Poulie à nervures multiples comprenant :

une surface d'appui de courroie ayant une pluralité de nervures (101) de poulie et de rainures (102) de poulie ;
la poulie à nervures multiples étant **caractérisée en ce qu'**elle comprend en outre
un espacement $S_{gn}$ de nervures de poulie entre des nervures adjacentes de poulie qui diminue progressivement à mesure qu'une distance (D) augmente progressivement en partant d'une ligne centrale (CL) de poulie ; et
un angle $\theta_n$ de rainure de poulie qui diminue progressivement à mesure que la distance (D2) augmente progressivement en partant d'une ligne centrale (CL) de poulie.

4. Poulie à nervures multiples selon la revendication 3, comprenant en outre :

une courbure pour les sommets (A) des nervures de poulie décrivant essentiellement une ellipse comprenant :

un diamètre majeur = environ 1,5 X une largeur nominale d'une courroie,
un diamètre mineur = environ 2 X un espacement nominal de nervure de poulie ; et
l'orientation du diamètre majeur est sensiblement parallèle à l'axe de rotation (A-A) de la poulie et la courbure des sommets est sensiblement concave dans la direction de l'axe de rotation (A-A).

5. Poulie à nervures multiples comprenant :

une surface d'appui de courroie ayant une pluralité de nervures (101) de poulie et de rainures (102) de poulie ; et la poulie à nervures multiples étant **caractérisée en ce qu'**elle comprend en outre :

un espacement $S_{gn}$ de nervures de poulie entre des nervures adjacentes de poulie qui diminue progressivement à mesure qu'une distance (D) augmente progressivement en partant d'une ligne centrale (CL) de poulie.

6. Poulie à nervures multiples selon la revendication 5, comprenant en outre :

un angle $\theta_n$ de rainures de poulie qui diminue progressivement à mesure que la distance (D2) augmente progressivement en partant d'une ligne centrale (CL) de poulie.

7. Poulie à nervures multiples selon la revendication 5, dans laquelle :

l'espacement des nervures de poulie dans une direction partant d'une ligne centrale (CL) de poulie est déterminé selon l'équation suivante :

$$S_{gn} = \tan\left(\frac{\theta_n}{2}\right) \times \left[ d_B \times \left( \frac{1}{\sin(\theta_n/2)} - \frac{1}{\sin(\theta_1/2)} \right) + \frac{S_g}{\tan(\theta_1/2)} \right]$$

où

$S_{gn}$ = espacement de nervure pour une $n^{ième}$ nervure de poulie

$S_g$ = espacement nominal de nervures de poulie $d_B$ = diamètre de bille ;

$\theta_n$ = angle de rainure de poulie, en degrés, pour la $n^{ième}$ rainure de poulie.

8. Poulie à nervures multiples selon la revendication 5, dans laquelle :

l'angle de chaque rainure de poulie est déterminé selon l'équation suivante :

$$\theta_n = a_n + \frac{b}{\pi} \times \tan^{-1}\left( \frac{t - 2n - 4}{3} \right) + \frac{b}{2}$$

où

$\theta_n$ = angle de rainure de poulie, en degrés, pour la $n^{ième}$ rainure de poulie

$n$ = nombre de nervures de poulie

$t$ = nombre total des rainures de poulie dans la poulie $a_n = \theta -[\%étirement \times (8{,}2t + 2n)]$

$b = \%étirement \times (6t + \theta)$

où

$\theta$ = angle nominal de rainure de poulie en degrés $\%étirement$ = pourcentage d'étirement de la courroie lorsqu'elle est soumise à une charge de traction.

**FIG.1**

**FIG.2**

.0920
.0908
.0890
.0872
.0861

CL

5  4  3  2  1  1  2  3  4  5

D

D2

32.8°

34.1°

36.2°  38.3°  39.6°

A————————————————A

FIG.3

100

200

FIG.4

.0920
.0906
.0877
.0873
.0865

CL

5 4 3 2 1 2 3 4 5

33.2°
34.2°
35.8°
37.9°
39.5°

A ——————————— A

FIG.5

100

200

FIG.6

**FIG.7**

**FIG.8**

**FIG.9**

**EP 1 934 503 B1**

## REFERENCES CITED IN THE DESCRIPTION

### Patent documents cited in the description

*   US 4981462 A, White